# EUROPEAN PATENT APPLICATION

(11) **EP 4 775 924 A1**
(43) Date of publication of application: **15.07.2026**
(21) Application number: 25151154.9
(22) Date of filing: 10.01.2025
(51) Int. Cl.: G01B 7/02, B65H 75/44

(54) **CABLE LENGTH MEASUREMENT DEVICE**

(71) Applicant: Shenzhen Huatuo Global Trade Co., Ltd., Shenzhen (CN)
(72) Inventor: ZHONG, Qianhua, Yichun City, Jiangxi Province (CN)
(74) Representative: Metida

(57) **Abstract**

A cable length measurement device, configured to: be connected a winding wheel and measure an extension or retraction length of a cable on the winding wheel, which includes a fixed shell, a rotating shell and a control panel. The rotating shell is rotatably connected to the fixed shell. The rotating shell is configured to be connected to the winding wheel and rotate around a rotation axis with the winding wheel. One of the fixed shell and the rotating shell is provided with a signal transmitter. The other one of the fixed shell and the rotating shell is connected to the control panel. The control panel is provided with a signal receiver. When the signal transmitter passes through the signal receiver, the signal receiver generates a counting signal, and the control panel receives the counting signal to calculate the extension or retraction length of the cable on the winding wheel.

## Description

### TECHNICAL FIELD

The present disclosure relates to the technical field of endoscope cable length measurement, and in particular, to a cable length measurement device.

### BACKGROUND OF THE INVENTION

Industrial endoscopes are mainly applied to automobiles, aviation engines, pipelines, mechanical parts, and the like. They can achieve non-destructive testing without disassembling or damaging assemblies and shutting down equipment. The industrial endoscopes are widely used in various departments of modern core industries such as aviation, automobiles, and ships. During use of an industrial endoscope, a probe extends into a detection space, and transmits a video signal to display equipment through a cable, so that people can intuitively observe an internal situation of the equipment, find out defect points in a timely manner, and roughly determine a location of a defect through an extension length of the cable.

At present, the existing industrial endoscopes on the market generally calculate the extension length of the cable by counting the number of turns of a winding wheel where the cable is located. These industrial endoscopes have low measurement accuracy and can only achieve rough estimation. The probe of the industrial endoscope cannot be accurately positioned, and the use effect is poor.

Therefore, the present disclosure provides a cable length measurement device that can effectively solve the above problems, with high measurement accuracy and the ability to accurately calculate an extension and retraction length of a cable.

### SUMMARY OF THE INVENTION

In order to overcome the shortcomings of the prior art, the present disclosure provides a cable length measurement device with high measurement accuracy and the ability to accurately calculate an extension and retraction length of a cable.

The technical solution adopted by the present disclosure to solve the technical problem is as follows.

A cable length measurement device, configured to: be connected a winding wheel and measure an extension or retraction length of a cable on the winding wheel, and includes:
a fixed shell, a rotating shell, and a control panel, wherein the rotating shell is rotatably connected to the fixed shell, and the rotating shell is configured to be connected to the winding wheel and rotate around a rotation axis with the winding wheel;
one of the fixed shell and the rotating shell is provided with a signal transmitter, and the other one of the fixed shell and the rotating shell is connected to the control panel; the control panel is provided with a signal receiver; when the signal transmitter passes through the signal receiver, the signal receiver generates a counting signal, and the control panel receives the counting signal to calculate the extension or retraction length of the cable on the winding wheel; and
at least two signal transmitters are provided, which are arranged in an equal spacing manner in a circumferential direction of the fixed shell or the rotating shell; alternatively, at least two signal receivers are provided, which are arranged in an equal spacing manner in a circumferential direction of the fixed shell or the rotating shell.

As an improvement of the present disclosure, the signal transmitters are magnets, and the signal receivers are Hall sensors.

As an improvement of the present disclosure, the fixed shell is provided with at least two magnet receiving slots on one side facing the rotating shell, and the magnets are inserted into the magnet receiving slots.

As an improvement of the present disclosure, the rotating shell is provided with a control panel receiving slot and a first limiting column; the first limiting column extends upward along a bottom wall of the control panel receiving slot; the control panel is inserted into the control panel receiving slot; a limiting hole is provided in the control panel; and the first limiting column is inserted into the limiting hole.

As an improvement of the present disclosure, the rotating shell is further provided with a second limiting column; the second limiting column extends upward along the bottom wall of the control panel receiving slot; and the second limiting column resists against a surface of the control panel.

As an improvement of the present disclosure, the cable length measurement device further includes a button assembly, the button assembly includes a button control panel and a button; the button control panel is arranged inside the fixed shell and is electrically connected to the control panel; and the button is arranged on one side of the fixed shell away from the rotating shell.

As an improvement of the present disclosure, the cable length measurement device further includes a bearing assembly, the fixed shell is provided with a bearing receiving slot; and the bearing assembly is inserted into the bearing receiving slot and is connected to the fixed shell and the rotating shell.

As an improvement of the present disclosure, the fixed shell is provided with a bearing fixing column; and the bearing fixing column is inserted into a bearing hole on an inner ring of the bearing assembly.

As an improvement of the present disclosure, the cable length measurement device further includes a first connector, a first through hole penetrating through the rotating shell is provided in the first limiting column; a first connecting hole is provided in an outer ring of the bearing assembly; and an end portion of the first connector is connected to the first connecting hole through the first through hole.

As an improvement of the present disclosure, the cable length measurement device further includes a rotary transmission assembly, the rotary transmission assembly is arranged on the fixed shell in a direction of the rotation axis; and the rotary transmission assembly is electrically connected to the control panel and the button control panel.

As an improvement of the present disclosure, a first receiving slot is provided in a center of the bearing fixing column; and the rotary transmission assembly is inserted into the first receiving slot and is connected to the bearing fixing column.

As an improvement of the present disclosure, the bearing fixing column is further provided with an opening communicated to the first receiving slot; the fixed shell is further provided with an output terminal on one side away from the rotating shell; the output terminal is configured to be electrically connected to a display device; a first data line group of the rotary transmission assembly is electrically connected to the button control panel and the output terminal through the opening; and a second data line group of the rotary transmission assembly is electrically connected to the control panel.

As an improvement of the present disclosure, the cable length measurement device further includes a limiting cover and a second connector, the limiting cover is provided with a second through hole; the bearing fixing column is provided with a second connecting hole; an end portion of the second connector is connected to the second connecting hole through the second through hole to limit the rotary transmission assembly within the first receiving slot.

As an improvement of the present disclosure, the rotary transmission assembly includes a connecting portion and a rotating portion; the rotating portion is rotatably connected to the connecting portion and maintains electrical connection; the connecting portion is provided with a third through hole; an end portion of the second connector passes through the third through hole; the connecting portion is electrically connected to the first data line group; and the rotating portion is electrically connected to the second data line group.

As an improvement of the present disclosure, the limiting cover is provided with a limiting slot on one side facing the rotary transmission assembly; and an end portion of the rotary transmission assembly is inserted into the limiting slot.

As an improvement of the present disclosure, the control panel is provided with a fourth through hole; a sixth through hole is provided in the middle of the limiting cover; and the second data line group passes through the fourth through hole and the sixth through hole.

As an improvement of the present disclosure, the cable length measurement device further includes a connecting wire, a first end of the connecting wire passes through the rotating shell and is electrically connected to the control panel; and a second end of the connecting wire is configured to be electrically connected to the cable on the winding wheel.

As an improvement of the present disclosure, the control panel receiving slot of the rotating shell is provided with a connecting wire receiving slot, and the connecting wire is arranged in the connecting wire receiving slot.

As an improvement of the present disclosure, the cable length measurement device further includes a third connector, the control panel is provided with a fifth through hole; the second limiting column is provided with a third connecting hole; and an end portion of the third connector is connected to the third connecting hole through the fifth through hole.

As an improvement of the present disclosure, a central hole communicated to the control panel receiving slot in a center of the rotating shell, and the central hole is located on the rotation axis. As an improvement of the present disclosure, one of the fixed shell and the rotating shell is provided with a sliding chute, and the other one of the fixed shell and the rotating shell is provided with a sliding block; and the sliding block is slidably inserted into the sliding chute.

Beneficial effects: Through the arrangement of the above structure, during use, the rotating shell is coaxially connected to the winding wheel. When the cable on the winding wheel extends out or retracts back, the winding wheel drives the rotating shell to rotate. When the signal transmitters pass through the signal receivers, the signal receives generate the counting signals. The control panel receives the counting signals and calculate an extension or retraction length of the cable according to a value of a central angle between two adjacent signal transmitters or two adjacent signal receivers, a diameter of the winding wheel, and the like. By the adding of the plurality of signal transmitters or the signal receivers, the detection precision can be effectively improved, so that a user can intuitively know a length that the cable can extend or retract, and determine the position where an endoscope probe is located, and the use experience is better. Preferably, the plurality of signal transmitters or the plurality of signal receivers are distributed on a circumference in the equal spacing manner. The circumference is divided into a plurality of portions, and the central angles corresponding to the various portions are equal.

### BRIEF DESCRIPTION OF DRAWINGS

In order to explain the technical solutions of the embodiments of the present disclosure more clearly, the following will briefly introduce the accompanying drawings used in the embodiments. The drawings in the following description are only some embodiments of the present disclosure. Those of ordinary skill in the art can obtain other drawings based on these drawings without creative work.

The present disclosure is further described below in detail in combination with the accompanying drawings and embodiments.
FIG. 1 is a schematic diagram of an entire structure of the present disclosure in an angle;
FIG. 2 is a schematic diagram of an entire structure of the present disclosure in another angle;
FIG. 3 is a structural exploded diagram of the present disclosure in an angle;
FIG. 4 is a structural exploded diagram of the present disclosure in another angle;
FIG. 5 is an enlarged view of circle A in FIG. 4;
FIG. 6 is a schematic diagram of an entire structure of a rotary transmission assembly according to the present disclosure;
FIG. 7 is a side view of the present disclosure;

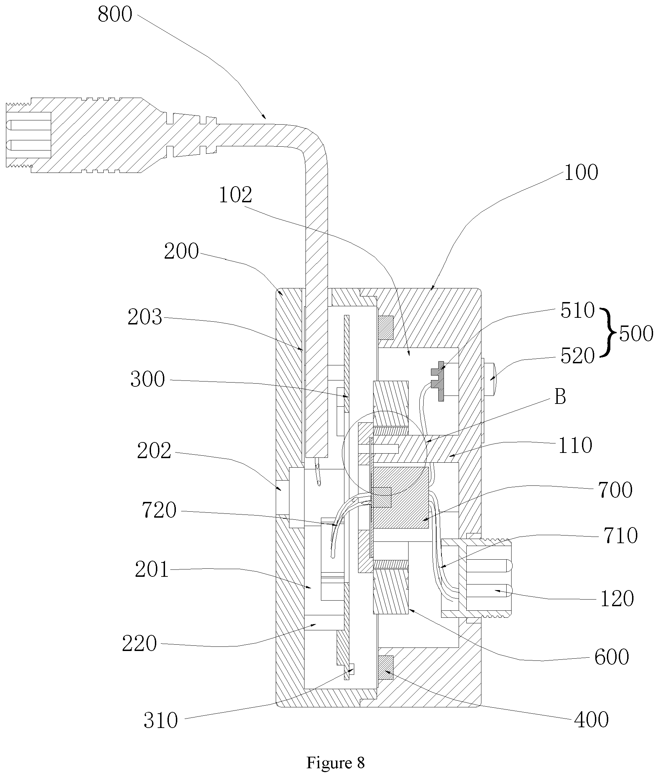

FIG. 8 is a sectional view of A-A of FIG. 7;

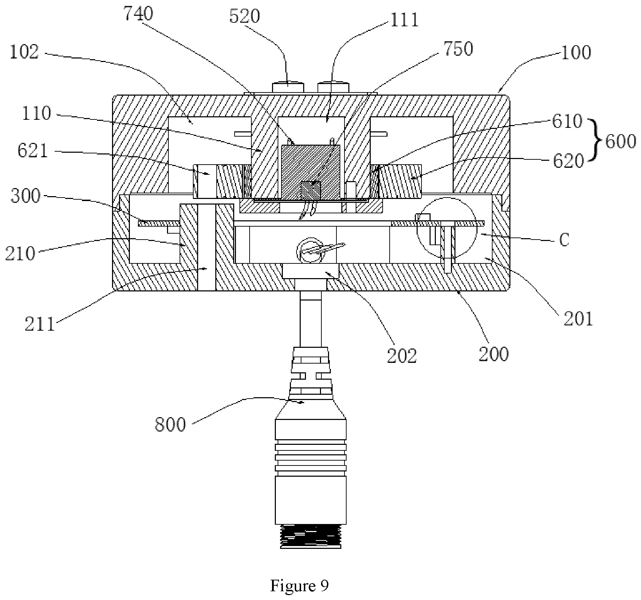

FIG. 9 is a sectional view of B-B of FIG. 7;

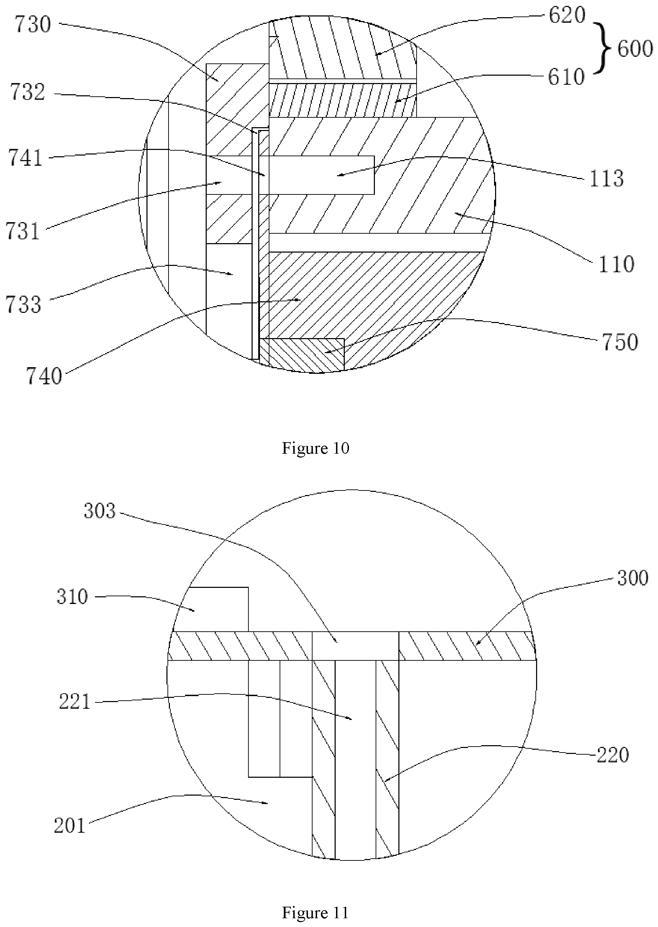

FIG. 10 is an enlarged view of circle B in FIG. 8; and
FIG. 11 is an enlarged view of circle C in FIG. 9.

### DETAILED DESCRIPTION OF THE INVENTION

To make the aforementioned objectives, features, and advantages of the present disclosure more comprehensible, specific implementations of the present disclosure are described in detail below in conjunction with the accompanying drawings. In the following description, numerous specific details are set forth to provide a thorough understanding of the present disclosure. The present disclosure may, however, be embodied in many forms different from that described here. A person skilled in the art can make similar improvements without departing from the connotation of the present disclosure. Therefore, the present disclosure is not limited by the specific embodiments disclosed below.

In the description of the present disclosure, It is to be understood that, The terms "center", "longitudinal", "transverse", "upper", "lower", "front", "rear", "left", "right", "vertical", "horizontal", "top", "bottom", "inner", "outer", "clockwise", "counterclockwise", and the like indicate azimuth or positional relationships based on the azimuth or positional relationships shown in the drawings, For purposes of convenience only of describing the present disclosure and simplifying the description, Rather than indicating or implying that the indicated device or element must have a particular orientation, be constructed and operated in a particular orientation, therefore, not to be construed as limiting the present disclosure.

In addition, the terms "first" and "second" are used for descriptive purposes only, while not to be construed as indicating or implying relative importance or implicitly specifying the number of technical features indicated thereby, features defining "first," "second," and "second" may explicitly or implicitly include one or more of the described features. In the description of the present disclosure, "multiple" means two or more unless explicitly specified otherwise.

In addition, the terms "install", "arrange", "provide", "connect" and "couple" should be understood broadly. For example, it can be a fixed connection, a detachable connection, an integral structure, a mechanical connection, an electrical connection, a direct connection, an indirect connection through an intermediate medium, or a communication between two devices, elements or components. For ordinary technical personnel in this field, the specific meanings of the above terms in present disclosure can be understood based on specific circumstances.

In the present disclosure, unless specific regulation and limitation otherwise, the first feature "onto" or "under" the second feature may include the direct contact of the first feature and the second feature, or may include the contact of the first feature and the second feature through other features between them instead of direct contact. Moreover, the first feature "onto", "above" and "on" the second feature includes that the first feature is right above and obliquely above the second feature, or merely indicates that the horizontal height of the first feature is higher than the second feature. The first feature "under", "below" and "down" the second feature includes that the first feature is right above and obliquely above the second feature, or merely indicates that the horizontal height of the first feature is less than the second feature.

It should be noted that when an element is referred to as being "fixed to" another element, the element can be directly on another component or there can be a centered element. When an element is considered to be "connected" to another element, the element can be directly connected to another element or there may be a centered element. The terms "inner", "outer", "left", "right", and similar expressions used herein are for illustrative purposes only and do not necessarily represent the only implementation.

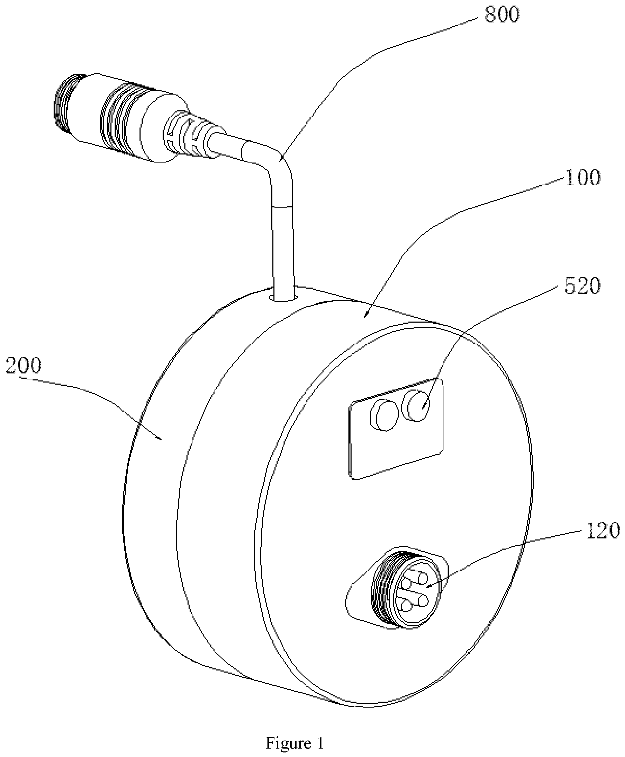

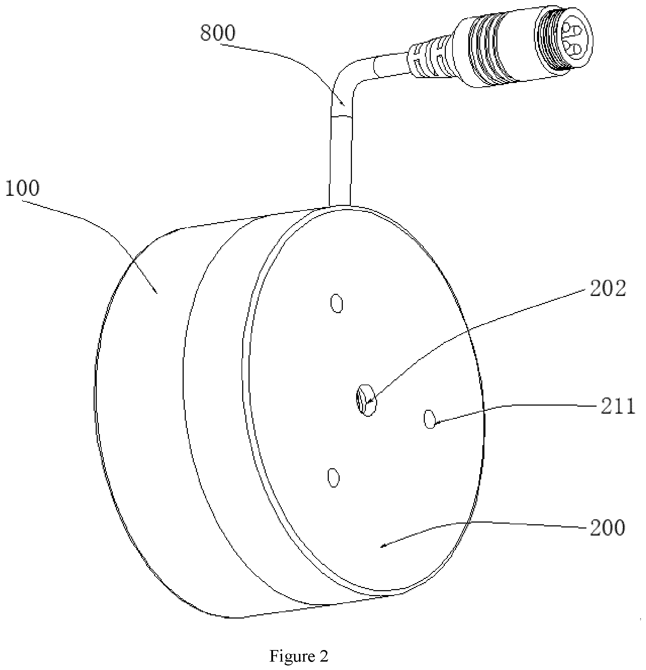

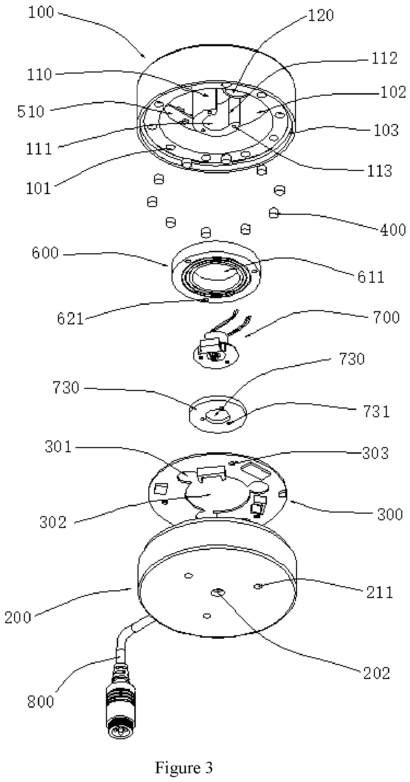

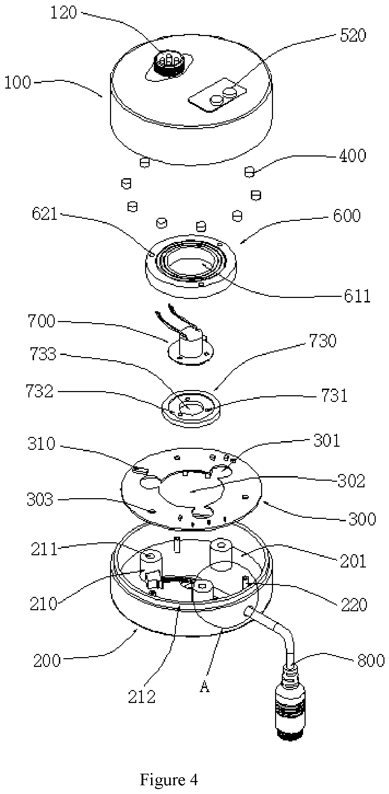

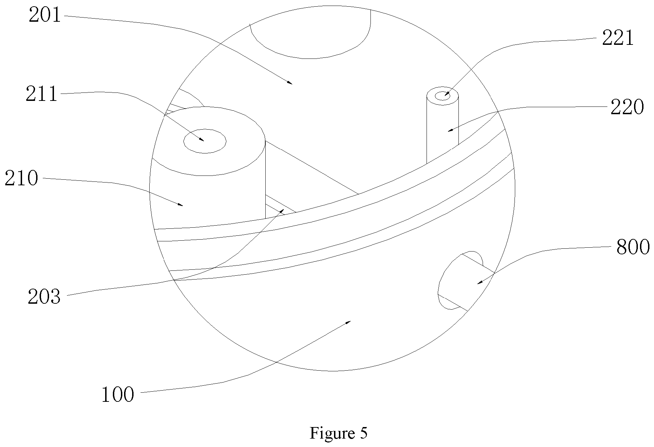

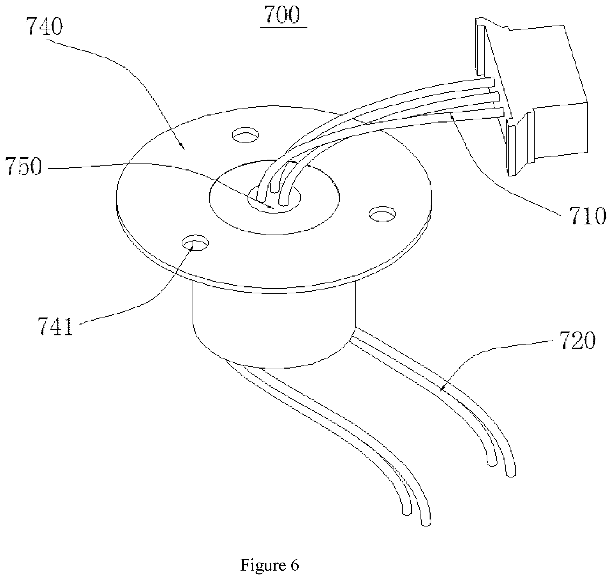

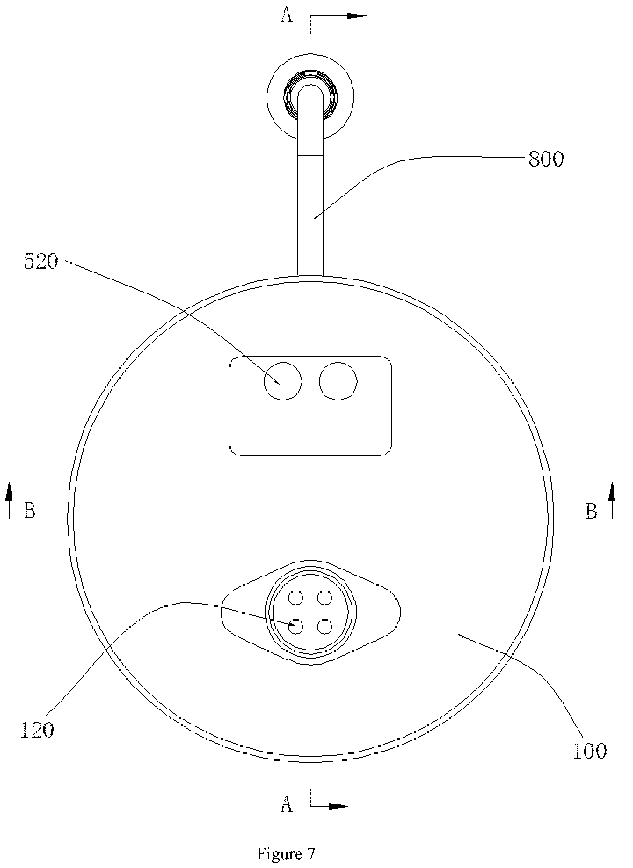

Referring to FIG. 1 to FIG. 7, a cable length measurement device, configured to: be connected to a winding wheel and measure an extension or retraction length of a cable on the winding wheel, includes:
a fixed shell 100, a rotating shell 200, and a control panel 300. The rotating shell 200 is rotatably connected to the fixed shell 100, and the rotating shell 200 is configured to be connected to the winding wheel and rotate around a rotation axis with the winding wheel.

One of the fixed shell 100 and the rotating shell 200 is provided with a signal transmitter 400, and the other one of the fixed shell 100 and the rotating shell 200 is connected to the control panel 300; and the control panel 300 is provided with a signal receiver 310. When the signal transmitter 400 passes through the signal receiver 310, the signal receiver 310 generates a counting signal, and the control panel 300 receives the counting signal to calculate the extension or retraction length of the cable on the winding wheel.

At least two signal transmitters 400 are provided, which are arranged in an equal spacing manner in a circumferential direction of the fixed shell 100 or the rotating shell 200. Alternatively, at least two signal receivers 310 are provided, which are arranged in an equal spacing manner in a circumferential direction of the fixed shell 100 or the rotating shell 200.

Through the arrangement of the above structure, during use, the rotating shell 200 is coaxially connected to the winding wheel. When the cable on the winding wheel extends out or retracts back, the winding wheel drives the rotating shell 200 to rotate. When the signal transmitters 400 pass through the signal receivers 310, the signal receives 310 generate the counting signals. The control panel 300 receives the counting signals and calculate an extension or retraction length of the cable according to a value of a central angle between two adjacent signal transmitters 400 or two adjacent signal receivers 310, a diameter of the winding wheel, and the like. By the adding of the plurality of signal transmitters 400 or the signal receivers 310, the detection precision can be effectively improved, so that a user can intuitively know a length that the cable can extend or retract, and determine the position where an endoscope probe is located, and the use experience is better. Preferably, the plurality of signal transmitters 400 or the plurality of signal receivers 310 are distributed on a circumference in the equal spacing manner. The circumference is divided into a plurality of portions, and the central angles corresponding to the various portions are equal. Preferably, there may be 10 signal transmitters 400, and the central angle between two adjacent signal transmitters 400 is 36 degrees.

In this embodiment, the signal transmitters 400 are magnets, and the signal receivers 310 are Hall sensors. Through the arrangement of the above structure, when the rotating shell 200 rotates relative to the fixed shell 100, the magnets pass through the Hall sensors. The Hall sensors detect a change in a magnetic flux, generates the counting signals, and send the counting signals to the control panel 300. Each time the control panels 300 receive the counting signals, it represents that the rotating shell 200 has rotated a preset angle relative to the fixed shell 100. The preset angle is the central angle between two adjacent magnets, which can be used to calculate the extension or retraction length of the cable. Similarly, the signal transmitters 400 and the signal receivers 310 can also be infrared sensors, photoelectric sensors, counting triggering sensors, and the like. The magnets and the Hall sensors have low costs and high stability.

In this embodiment, the fixed shell 100 is provided with at least two magnet receiving slots 101 on one side facing the rotating shell 200, and the magnets are inserted into the magnet receiving slots 101. By the arrangement of the above structure, the plurality of magnet receiving slots 101 are equally spaced along the circumference of the rotating shell 200, which can effectively position and receive the magnets. On the one hand, it ensures the stability of the product, and on the other hand, the central angle between two adjacent magnets can be fixed, making it convenient to calculate a rotation angle of the rotating shell 200 and thus calculate the extension or retraction length of the cable.

In this embodiment, the rotating shell 200 is provided with a control panel receiving slot 201 and a first limiting column 210; the first limiting column 210 extends upward along a bottom wall of the control panel receiving slot 201; the control panel 300 is inserted into the control panel receiving slot 201; a limiting hole 301 is provided in the control panel 300; and the first limiting column 210 is inserted into the limiting hole 301. Through the arrangement of the above structure, the control panel 300 is arranged in the control panel receiving slot 201, which can effectively protect the control panel 300 and prevent the control panel 300 from being damaged. The first limiting column 210 is inserted into the limiting hole 301, which can prevent the control panel 300 from moving radially or circumferentially in the control panel receiving slot 201, which further ensures the stability of the product. Meanwhile, as the signal receivers 310 are arranged on the control panel 300, the stability of the control panel 300 can also limit the positions of the signal receivers 310, to prevent displacement of the signal receives 310 from affecting a measurement result.

In this embodiment, the rotating shell 200 is further provided with a second limiting column 220; the second limiting column 220 extends upward along the bottom wall of the control panel receiving slot 201; and the second limiting column 220 resists against a surface of the control panel 300. Through the arrangement of the above structure, the second limiting column 220 can resist against the surface of the control panel 300 to limit the axial movement of the control panel 300, which further ensures the stability of the product. Meanwhile, a connection space is formed between the surface of the control panel 300 and the bottom wall of the control panel receiving slot 201. The connection space can allow the cable to be connected to the control panel 300, facilitate transmission of signals and data, and make the product have a more appropriate structure distribution.

In this embodiment, the cable length measurement device further includes a button assembly 500; the button assembly 500 includes a button control panel 510 and a button 520; the button control panel 510 is arranged inside the fixed shell 100 and is electrically connected to the control panel 300; and the button 520 is arranged on one side of the fixed shell 100 away from the rotating shell 200. Through the arrangement of the above structure, during use, a user can directly press the button 520 located on the fixed shell 100 to operate the product, such as changing a length measurement unit to a metric or imperial measurement unit, thereby improving the applicability of the product, or zeroing data and recalculating the length of the cable, thereby making it more convenient for use by a user.

In this embodiment, the cable length measurement device further includes a bearing assembly 600; the fixed shell 100 is provided with a bearing receiving slot 102; and the bearing assembly 600 is inserted into the bearing receiving slot 102 and is connected to the fixed shell 100 and the rotating shell 200. Through the arrangement of the above structure, the bearing assembly 600 is arranged in the bearing receiving slot 102, which can effectively protect the bearing assembly 600 and prolong the service life of the product. The bearing assembly 600 is connected to the fixed shell 100 and the rotating shell 200 respectively, which can reduce the frictional force when the rotating shell 200 rotates relative to the fixed shell 100, making the rotation of the rotating shell 200 smoother and more stable.

In this embodiment, the fixed shell 100 is provided with a bearing fixing column 110; and the bearing fixing column 110 is inserted into a bearing hole 611 on an inner ring 610 of the bearing assembly 600. Through the arrangement of the above structure, the bearing fixing column 110 is inserted into the bearing hole 611 in an interference fit manner, which can tightly connect the inner ring 610 of the bearing assembly 600 to the bearing fixing column 110 and then to the fixed shell 100. The assembling is convenient, and the connection is stable.

In this embodiment, the cable length measurement device further includes a first connector; a first through hole 211 penetrating through the rotating shell 200 is provided in the first limiting column 210; a first connecting hole 621 is provided in an outer ring 620 of the bearing assembly 600; and an end portion of the first connector is connected to the first connecting hole 621 through the first through hole 211. By the arrangement of the above structure, during use, the end portion of the first connector passes through the first through hole 211 and is connected to the first connecting hole 621, which can fixedly connect the rotating shell 200 with the outer ring 620 of the bearing assembly 600. The connection is stable. The first connector is usually a screw.

In this embodiment, the cable length measurement device further includes: a rotary transmission assembly 700; the rotary transmission assembly 700 is arranged on the fixed shell 100 in a direction of the rotation axis; and the rotary transmission assembly 700 is electrically connected to the control panel 300 and the button control panel 510. By the arrangement of the above structure, during use, one end of the rotary transmission assembly 700 is electrically connected to the control panel 300, and the other end is electrically connected to the button control panel 510, so as to maintain a stable electrical connection between the control panel 300 and the button control panel 510 when the rotating shell 200 rotates relative to the fixed shell 100, thereby achieving stable transmission of signals and data. Generally, the rotary transmission assembly 700 is an electric slip ring.

In this embodiment, a first receiving slot 111 is provided in a center of the bearing fixing column 110; and the rotary transmission assembly 700 is inserted into the first receiving slot 111 and is connected to the bearing fixing column 110. Through the arrangement of the above structure, the rotary transmission assembly 700 is inserted into the first receiving slot 111, which can effectively protect the rotary transmission assembly 700, ensure the stability of the product, and stably connect the rotary transmission assembly 700 to the bearing fixing column 110.

In this embodiment, the bearing fixing column 110 is further provided with an opening 112 communicated to the first receiving slot 111; the fixed shell 100 is further provided with an output terminal 120 on one side away from the rotating shell 200; the output terminal 120 is configured to be electrically connected to a display device; a first data line group 710 of the rotary transmission assembly 700 is electrically connected to the button control panel 510 and the output terminal 120 through the opening 112; and a second data line group 720 of the rotary transmission assembly 700 is electrically connected to the control panel 300. Through the arrangement of the above structure, the opening 112 can allow the first data line group 710 to pass through, to electrically connect the key control panel 510 and output terminal 120 with the rotary transmission assembly 700, and to electrically connect the control panel 300 with the rotary transmission assembly 700 through the second data line group 720, achieving electrical connection of an entire circuit system. The product has an appropriate structure and stable signal and data transmission. During use, the control panel 300 transmits the signals generated by the signal receivers 310 and video data transmitted by the endoscope probe through the rotary transmission assembly 700 to the output terminal 120, and finally the signals and the video data are displayed through a display device.

In this embodiment, the cable length measurement device further includes a limiting cover 730 and a second connector; the limiting cover 730 is provided with a second through hole 731; the bearing fixing column 110 is provided with a second connecting hole 113; an end portion of the second connector is connected to the second connecting hole 113 through the second through hole to limit the rotary transmission assembly 700 within the first receiving slot 111. Through the arrangement of the above structure, during use, the second connector is connected to the second connecting hole 113 through the second through hole 731 to achieve connection between the limiting cover 730 and the bearing fixing column 110. The limiting cover 730 limits the rotation transmission assembly 700 in the first receiving slot 111, thereby ensuring the stability of the product.

In this embodiment, the rotary transmission assembly 700 includes a connecting portion 740 and a rotating portion 750; the rotating portion 750 is rotatably connected to the connecting portion 740 and maintains electrical connection; the connecting portion 740 is provided with a third through hole 741; an end portion of the second connector passes through the third through hole 741; the connecting portion 740 is electrically connected to the first data line group 710; and the rotating portion 750 is electrically connected to the second data line group 720. Through the arrangement of the above structure, during use, the rotating shell 200 rotates relative to the fixed shell 100. The second data line group 720 is electrically connected to the control panel 300. The control panel 300 is connected to the rotating shell 200. The control panel 300, the second data line group 720, and the rotating portion 750 rotates with the rotating shell 200. The connecting portion 740 is arranged on the fixed shell 100. The first data line group 710 is electrically connected to the connecting portion 740, the output terminal 120, and the button control panel 510 to achieve data transmission.

In this embodiment, the limiting cover 730 is provided with a limiting slot 732 on one side facing the rotary transmission assembly 700; and an end portion of the rotary transmission assembly 700 is inserted into the limiting slot 732. Through the arrangement of the above structure, during use, the limiting cover 730 is connected to the bearing fixing column 110 through the second connector, and the end portion of the rotary transmission assembly 700 is inserted into the limiting slot 732, thereby effectively limiting the rotary transmission assembly 700 and improving the stability of the product.

In this embodiment, the control panel 300 is provided with a fourth through hole 302; a sixth through hole 733 is provided in the middle of the limiting cover 730; and the second data line group 720 passes through the fourth through hole 302 and the sixth through hole 733. Through the arrangement of the above structure, the second data line group 720 passes through the fourth through hole 302 and the sixth through hole 733, and is electrically connected to a surface of the control panel 300. The product has simple wiring and an appropriate layout.

In this embodiment, the cable length measurement device further includes a connecting wire 800; a first end of the connecting wire 800 passes through the rotating shell 200 and is electrically connected to the control panel 300; and a second end of the connecting wire 800 is configured to be electrically connected to the cable on the winding wheel. Through the arrangement of the above structure, the first end of the connecting wire 800 is electrically connected to the control panel 300, and the other end of the connecting wire 800 is electrically connected to the cable on the winding wheel. Through the cable and the connecting wire 800, the endoscope probe transmits the video data to the control panel 300. The control panel 300 calculates data of the extension or retraction length of the cable based on technical signals generated by the signal receivers 310, and transmits the video data and the data of the extension or retraction length of the cable to the output terminal 120 through the rotary transmission assembly 700. The output terminal 120 is electrically connected to the display device. The display device displays a video and the data of the extension or retraction length of the cable.

In this embodiment, the control panel receiving slot 201 of the rotating shell 200 is provided with a connecting wire receiving slot 203, and the connecting wire 800 is arranged in the connecting wire receiving slot 203. Through the arrangement of the above structure, during use, the connecting wire 800 is placed in the connecting wire receiving slot 203, and the connecting wire 800 is fixed using a fixing device, can effectively improve the stability of the product and prevent the connecting wire 800 from shifting. The fixing device is generally a cable organizer.

In this embodiment, the cable length measurement device further includes g a third connector; the control panel 300 is provided with a fifth through hole 303; the second limiting column 220 is provided with a third connecting hole 221; and an end portion of the third connector is connected to the third connecting hole 221 through the fifth through hole 303. Through the arrangement of the above structure, during use, the end portion of the third connector is connected to the third connecting hole 221 through the fifth through hole 303, which can fix the control panel 300 on the second limiting column 220, hinder the axial movement of the control panel 300, and improve the stability of the product. Generally, the third connector is a screw.

In this embodiment, a central hole 202 communicated to the control panel receiving slot 201 in a center of the rotating shell 200, and the central hole 202 is located on the rotation axis. Through the arrangement of the above structure, the cable length measurement device can be coaxially connected to the winding wheel through the central hole 202, so that the cable length measurement device rotates coaxially with the winding wheel. Through the arrangement of the above structure, the central hole 202 is located on the rotating axis. Through the central hole 202, it is convenient for a user to connect the product coaxially with the winding wheel, to ensure correct mounting and facilitate use by a user.

In this embodiment, one of the fixed shell 100 and the rotating shell 200 is provided with a sliding chute 103, and the other one of the fixed shell 100 and the rotating shell 200 is provided with a sliding block 212; and the sliding block 212 is slidably inserted into the sliding chute 103. Through the arrangement of the above structure, the sliding block 212 is inserted into the sliding chute 103. When the rotating shell 200 rotates relative to the fixed shell 100, the sliding block 212 slides in the sliding chute 103 to connect the fixed shell 100 with the rotating shell 200 more stably, and the relative rotation between the fixed shell and the rotating shell is smoother.

## Claims

1. A cable length measurement device, configured to: be connected a winding wheel and measure an extension or retraction length of a cable on the winding wheel, and comprising:
a fixed shell, a rotating shell, and a control panel, wherein the rotating shell is rotatably connected to the fixed shell, and the rotating shell is configured to be connected to the winding wheel and rotate around a rotation axis with the winding wheel;
one of the fixed shell and the rotating shell is provided with a signal transmitter, and the other one of the fixed shell and the rotating shell is connected to the control panel; the control panel is provided with a signal receiver; when the signal transmitter passes through the signal receiver, the signal receiver generates a counting signal, and the control panel receives the counting signal to calculate the extension or retraction length of the cable on the winding wheel; and
at least two signal transmitters are provided, which are arranged in an equal spacing manner in a circumferential direction of the fixed shell or the rotating shell; alternatively,
at least two signal receivers are provided, which are arranged in an equal spacing manner in a circumferential direction of the fixed shell or the rotating shell.

2. The cable length measurement device according to claim 1, wherein the signal transmitters are magnets, and the signal receivers are Hall sensors.

3. The cable length measurement device according to claim 2, wherein the fixed shell is provided with at least two magnet receiving slots on one side facing the rotating shell, and the magnets are inserted into the magnet receiving slots.

4. The cable length measurement device according to claim 1, wherein the rotating shell is provided with a control panel receiving slot and a first limiting column; the first limiting column extends upward along a bottom wall of the control panel receiving slot; the control panel is inserted into the control panel receiving slot; a limiting hole is provided in the control panel; and the first limiting column is inserted into the limiting hole.

5. The cable length measurement device according to claim 4, wherein the rotating shell is further provided with a second limiting column; the second limiting column extends upward along the bottom wall of the control panel receiving slot; and the second limiting column resists against a surface of the control panel.

6. The cable length measurement device according to claim 4, further comprising a button assembly, wherein the button assembly comprises a button control panel and a button; the button control panel is arranged inside the fixed shell and is electrically connected to the control panel; and the button is arranged on one side of the fixed shell away from the rotating shell.

7. The cable length measurement device according to claim 6, further comprising a bearing assembly, wherein the fixed shell is provided with a bearing receiving slot; and the bearing assembly is inserted into the bearing receiving slot and is connected to the fixed shell and the rotating shell.

8. The cable length measurement device according to claim 7, wherein the fixed shell is provided with a bearing fixing column; and the bearing fixing column is inserted into a bearing hole on an inner ring of the bearing assembly.

9. The cable length measurement device according to claim 7, further comprising a first connector, wherein a first through hole penetrating through the rotating shell is provided in the first limiting column; a first connecting hole is provided in an outer ring of the bearing assembly; and an end portion of the first connector is connected to the first connecting hole through the first through hole.

10. The cable length measurement device according to claim 8, further comprising a rotary transmission assembly, wherein the rotary transmission assembly is arranged on the fixed shell in a direction of the rotation axis; and the rotary transmission assembly is electrically connected to the control panel and the button control panel.

11. The cable length measurement device according to claim 10, wherein a first receiving slot is provided in a center of the bearing fixing column; and the rotary transmission assembly is inserted into the first receiving slot and is connected to the bearing fixing column.

12. The cable length measurement device according to claim 11, wherein the bearing fixing column is further provided with an opening communicated to the first receiving slot; the fixed shell is further provided with an output terminal on one side away from the rotating shell; the output terminal is configured to be electrically connected to a display device; a first data line group of the rotary transmission assembly is electrically connected to the button control panel and the output terminal through the opening; and a second data line group of the rotary transmission assembly is electrically connected to the control panel.

13. The cable length measurement device according to claim 12, further comprising a limiting cover and a second connector, wherein the limiting cover is provided with a second through hole; the bearing fixing column is provided with a second connecting hole; an end portion of the second connector is connected to the second connecting hole through the second through hole to limit the rotary transmission assembly within the first receiving slot.

14. The cable length measurement device according to claim 13, wherein the rotary transmission assembly comprises a connecting portion and a rotating portion; the rotating portion is rotatably connected to the connecting portion and maintains electrical connection; the connecting portion is provided with a third through hole; an end portion of the second connector passes through the third through hole; the connecting portion is electrically connected to the first data line group; and the rotating portion is electrically connected to the second data line group.

15. The cable length measurement device according to claim 13, wherein the limiting cover is provided with a limiting slot on one side facing the rotary transmission assembly; and an end portion of the rotary transmission assembly is inserted into the limiting slot.

## Amended claims

### Amended claims in accordance with Rule 137(2) EPC.

1. A cable length measurement device, configured to: be connected a winding wheel and measure an extension or retraction length of a cable on the winding wheel, and comprising:
a fixed shell (100), a rotating shell (200), and a control panel (300), wherein the rotating shell (200) is rotatably connected to the fixed shell (100), and the rotating shell (200) is configured to be connected to the winding wheel and rotate around a rotation axis with the winding wheel;
one of the fixed shell (100) and the rotating shell (200) is provided with a signal transmitter (400), and the other one of the fixed shell (100) and the rotating shell (200) is connected to the control panel (300); the control panel (300) is provided with a signal receiver (310); when the signal transmitter (400) passes through the signal receiver (310), the signal receiver (310) generates a counting signal, and the control panel (300) receives the counting signal to calculate the extension or retraction length of the cable on the winding wheel;
wherein the cable length measurement device further comprises a button assembly (500) and a rotary transmission assembly (700); the button assembly (500) comprises a button control panel (510);
the rotary transmission assembly (700) is arranged on the fixed shell (100) in a direction of the rotation axis, and is electrically connected to the control panel (300) and the button control panel (510); the rotary transmission assembly (700) comprises a connecting portion (740), a rotating portion (750) rotatably connected to the connecting portion (740), a first data line group (710) and a second data line group (720); the first data line group (710) is electrically connected to the button control panel (510), the second data line group (720) is electrically connected to the control panel (300); the connecting portion (740) is electrically connected to the first data line group (710), and the rotating portion (750) is electrically connected to the second data line group (720).

2. The cable length measurement device according to claim 1, wherein the signal transmitters (400) are magnets, and the signal receivers are Hall sensors.

3. The cable length measurement device according to claim 2, wherein the fixed shell (100) is provided with at least two magnet receiving slots on one side facing the rotating shell (200), and the magnets are inserted into the magnet receiving slots.

4. The cable length measurement device according to claim 1, wherein the rotating shell (200) is provided with a control panel receiving slot (201) and a first limiting column (210); the first limiting column (210) extends upward along a bottom wall of the control panel receiving slot (201); the control panel (300) is inserted into the control panel receiving slot (201); a limiting hole (301) is provided in the control panel (300); and the first limiting column (210) is inserted into the limiting hole (301).

5. The cable length measurement device according to claim 4, wherein the rotating shell (200) is further provided with a second limiting column (220); the second limiting column (220) extends upward along the bottom wall of the control panel receiving slot (201); and the second limiting column (220) resists against a surface of the control panel (300).

6. The cable length measurement device according to claim 4, further comprising a bearing assembly (600), wherein the fixed shell (100) is provided with a bearing receiving slot (102); and the bearing assembly (600) is inserted into the bearing receiving slot (102) and is connected to the fixed shell (100) and the rotating shell (200).

7. The cable length measurement device according to claim 6, wherein the fixed shell (100) is provided with a bearing fixing column (110); and the bearing fixing column (110) is inserted into a bearing hole (611) on an inner ring (610) of the bearing assembly (600).

8. The cable length measurement device according to claim 6, further comprising a first connector, wherein a first through hole (211) penetrating through the rotating shell is provided in the first limiting column (210); a first connecting hole (621) is provided in an outer ring (620) of the bearing assembly (600); and an end portion of the first connector is connected to the first connecting hole (621) through the first through hole (211).

9. The cable length measurement device according to claim 8, wherein a first receiving slot (111) is provided in a center of the bearing fixing column (110); and the rotary transmission assembly (700) is inserted into the first receiving slot (111) and is connected to the bearing fixing column (110).

10. The cable length measurement device according to claim 9, wherein the bearing fixing column (110) is further provided with an opening (112) communicated to the first receiving slot (111); the fixed shell (100) is further provided with an output terminal (120) on one side away from the rotating shell (200); the output terminal (120) is configured to be electrically connected to a display device; the first data line group (710) of the rotary transmission assembly (700) is electrically connected to the button control panel (510) and the output terminal (120) through the opening (112).

11. The cable length measurement device according to claim 10, further comprising a limiting cover (730) and a second connector, wherein the limiting cover (730) is provided with a second through hole (731); the bearing fixing column (110) is provided with a second connecting hole (113); an end portion of the second connector is connected to the second connecting hole (113) through the second through hole to limit the rotary transmission assembly (700) within the first receiving slot (111).

12. The cable length measurement device according to claim 11, wherein the rotating portion is rotatably connected to the connecting portion while maintaining electrical connection; the connecting portion (740) is provided with a third through hole (741); an end portion of the second connector passes through the third through hole (741).

13. The cable length measurement device according to claim 11, wherein the limiting cover (730) is provided with a limiting slot (732) on one side facing the rotary transmission assembly (700); and an end portion of the rotary transmission assembly (700) is inserted into the limiting slot (732).
